# EUROPEAN PATENT SPECIFICATION

(11) **EP 4 092 793 B1**
(45) Date of publication and mention of the grant of the patent: **28.10.2026**
(21) Application number: 21886546.7
(22) Date of filing: 08.09.2021
(51) Int. Cl.: H01M 10/052, H01M 10/0585, H01M 50/46, H01M 50/531, H01M 50/586

(54) **BATTERY CELL, METHOD FOR MANUFACTURING A BATTERY CELL, AND A BATTERY MODULE WITH SUCH BATTERY CELL**
BATTERIEZELLE, VERFAHREN ZUR HERSTELLUNG EINER BATTERYZELLE, UND BATTERIEMODUL
CELLULE DE BATTERIE, PROCÉDÉ DE FABRICATION D'UNE CELLULE DE BATTERIE, ET MODULE DE BATTERIE

(30) Priority: 27.10.2020 KR 20200140347; 03.09.2021 KR 20210117898
(43) Date of publication of application: 23.11.2022
(73) Proprietor: LG Energy Solution, Ltd., Seoul 07335 (KR)
(72) Inventor: BYUN, Gahngmin, Daejeon 34122 (KR); KIM, Gi Man, Daejeon 34122 (KR); KWAK, Sung Yun, Daejeon 34122 (KR)
(74) Representative: Goddar, Heinz J.
(86) International application number: PCT/KR2021/012227
(87) International publication number: WO 2022/092549

(56) References cited:
- JP-A- 2011 238 357
- JP-A- 2016 038 995
- JP-A- H09 213 377
- JP-A- H10 188 938
- KR-A- 20120 052 041
- KR-A- 20120 052 041
- US-A1- 2011 135 996
- US-A1- 2020 185 675

## Description

The present invention relates to a battery cell, a battery module with such battery cell, and a manufacturing method (see claims 1, 12 and 5 respectively). and more particularly to a battery cell that realizes sealing technologies and a manufacturing method thereof.

### [BACKGROUND]

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, as technology development and demands for mobile devices increase, the demand for batteries as energy sources is rapidly increasing, and accordingly, many researches on batteries capable of meeting diverse demands have been conducted.

Typically, the demand for the lithium secondary battery, such as a lithium ion battery or a lithium ion polymer battery, which have advantages such as a high energy density, a discharge voltage, an output stability, and the like is high.

Further, the secondary battery may be classified based on how the electrode assembly, having a structure in which a positive electrode, a negative electrode, and a separator interposed between the positive electrode and the negative electrode are stacked, is structured. Typically, the electrode assembly may include a jelly-roll (wound) type electrode assembly in which long sheet type positive electrodes and long sheet type negative electrodes are wound with a separator being interposed therebetween, and a stacked (laminated) type electrode assembly in which a plurality of positive electrodes and negative electrodes, cut into predetermined unit sizes, are sequentially stacked with separators being interposed therebetween, and the like.

Further, the secondary battery is classified based on the shape of a battery case into a cylindrical battery having an electrode assembly mounted in a cylindrical case, a prismatic battery having an electrode assembly mounted in a prismatic case, and a pouch-shaped case having an electrode assembly mounted in a pouch-shaped case formed of an aluminum laminate sheet.

In the case of a pouch-type battery cell, the electrode assembly stacked in the order of a separator, a negative electrode, a separator, and a positive electrode is inserted into the pouch case, and then the pouch case can be sealed together with an electrolytic solution, and adhesion between the separators may also be required.

US 2011/135996 A1 describes an electrode assembly block, a method of manufacturing the electrode assembly block ofa secondary battery and a method of manufacturing the secondary battery.

KR 2012 0052041 A (describing the preamble of claims 1 and 5) relates to separator sealing apparatus and manufacturing method of secondary battery using the same.

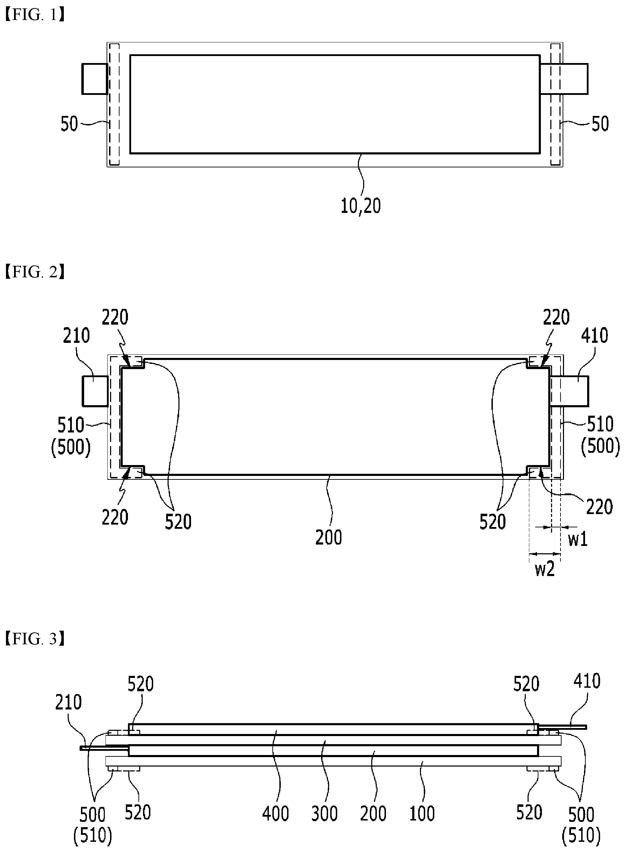

Fig. 1 is a view showing an adhesion method between separators according to the related art.

Referring to Fig. 1, conventionally, in order to press the separator 20 interposed between the negative electrode plate and the positive electrode plate 10 and on one side thereof to adhere the separators to each other, an adhesion process between the separators was performed by pressing the separators using a straight sealing member 50 on the portion where the negative electrode tab and the positive electrode tab were formed.

However, since the sealing member 50 herein is formed in a straight shape, a relatively weak adhesive force is acted on the corner portions of the separators corresponding to both end parts of the sealing member 50, which may cause a folding phenomenon of the separators. Further, the portion where the sealing member is pressed during the sealing process and the portion where the negative electrode plate or the positive electrode plate is formed overlap with each other, whereby an interference phenomenon due to the pressing of the sealing member may occur on the negative electrode or the positive electrode is likely to occur.

### [DETAILED DESCRIPTION OF THE INVENTION]

### [Technical Problem]

It is an object of the present invention to provide a battery cell for preventing folding of the separator during the separator adhesion process, and a manufacturing method thereof.

A battery cell, a method of manufacturing a battery cell, and a battery module with such battery according to the present invention are defined in claims 1, 5 and 12 respectively.

Further preferred embodiments are defined in their dependent claims.

### [Technical Solution]

In order to achieve the above object, according to one embodiment of the present invention, there is provided a battery cell as defined in claim 1, and comprising:
an electrode assembly formed by sequentially stacking a first separator, a negative electrode plate, a second separator and a positive electrode plate having a rectangular shape;
a negative electrode tab formed to protrude from the negative electrode plate; and
a positive electrode tab formed to protrude from the positive electrode plate,
wherein the first separator and the second separator have larger size in all four sides than the negative electrode plate and the positive electrode plate, and the whole of the tab edge portions of the first and second separators located on the side on which the positive electrode tab and the negative electrode tab are formed and a part of the both side edge portions connected to the tab edge portion are adhered to each other, whereby the adhesion width inward from the tab edge portion is smaller than the inward adhesion width at both ends where the tab edge portion and the both side edges portions are connected. At this time, the inward adhesion width at the tab edge portion is 2% to 50% smaller than the inward adhesion width at both ends where the tab edge portion and the both side edges portions are connected.

The positive electrode plate and the negative electrode plate may not interfere with the adhered portions of the first and second separators. More specifically, a recessed portion corresponding to the adhesive shape may be formed at the four corners of the negative electrode plate, so that the negative electrode plate does not interfere with a portion to which a part of both side edge portions of the first and second separators are adhered.

In order to achieve the above object, according to another embodiment of the present invention, there is provided a method for manufacturing a battery cell as defined in claim 5, and comprising the steps of:
sequentially stacking a first separator, a negative electrode plate, a second separator and a positive electrode plate to form an electrode assembly; and
pressing and sealing the first and second separators by using a sealing member having a bent portion in which the width at both ends is formed wider than the width at the central portion.

Here, the sealing member may be formed of a sealing bar.

More specifically, in the step of pressing and sealing the first and second separators using the sealing member, the sealing member may be formed in a shape corresponding to the edge portions of the first and second separators on which the positive electrode tab and the negative electrode tab are formed, so as to press the whole of the tab edge portions of the first and second separators located on the side on which the positive electrode tab and the negative electrode tab are formed and a part of the both side edge portions connected to the tab edge portion

Further, a heating means may be formed inside the sealing member.

The sealing member may press the first and second separators so as not to interfere with the positive electrode plate and the negative electrode plate. The method may further include forming a recessed portion in the four corner portions of the negative electrode plate, before forming the electrode assembly. At this time, in the step of pressing and sealing the first and second separators using the sealing member, the bent portion of the sealing member may press the first and second separators so as to correspond to the recessed portion in the four corner portions of the negative electrode plate.

According to yet another embodiment of the present invention, there is provided a battery module as defined in claim 12, and comprising the above-mentioned battery cell.

### [BRIEF DESCRIPTION OF THE DRAWINGS]

Fig. 1 is a view showing an adhesion method between separators according to the related art;
Fig. 2 is a view showing a state in which the sealing member presses the electrode assembly according to an embodiment of the present disclosure; and
Fig. 3 is a side view of Fig. 2.

### [DETAILED DESCRIPTION OF THE EMBODIMENTS]

It should be appreciated that the exemplary embodiments, which will be described below, are illustratively described to help understand the present invention, and the present invention may be variously modified to be carried out differently from the exemplary embodiments described herein, as long as they remain within the scope of the present invention as defined in the appended claims. In addition, in order to help understand the present invention, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, constitutional elements, or combinations thereof, but it should be understood that they do not preclude a possibility of existence or addition of one or more other features, numbers, steps, constitutional elements, or combinations thereof.

Now, the battery cell according to an embodiment will be described with reference to Figs. 2 and 3.

Fig. 2 is a view showing a state in which the sealing member presses the electrode assembly according to an embodiment of the present disclosure. Fig. 3 is a side view of Fig. 2.

Referring to Figs. 2 and 3, the battery cell according to an embodiment of the present disclosure includes an electrode assembly formed by sequentially stacking a first separator 100, a negative electrode plate 200, a second separator 300 and a positive electrode plate 400 having a rectangular shape, a negative electrode tab 210 formed to protrude from the negative electrode plate 200, and a positive electrode tab 410 formed to protrude from the positive electrode plate 400.

The battery cell is a secondary battery and may be configured into a pouch-type secondary battery. Such a battery cell can be configured by a plurality of numbers, and the plurality of battery cells can be stacked together so as to be electrically connected to each other, thereby forming a battery cell stack. The battery cell may include an electrode lead protruding from the electrode assembly and a pouch case including the electrode assembly. The pouch case is for packaging the electrode assembly, and may be formed of a laminate sheet including a resin layer and a metal layer.

According to the present embodiment, the electrode assembly can be composed of a positive electrode plate, a negative electrode plate, and a separator. More specifically, as shown in Fig. 3, the first separator 100, the negative electrode plate 200, the second separator 300, and the positive electrode plate 400 having a rectangular shape can be sequentially stacked to form an electrode assembly. At this time, the first separator 100 and the second separator 300 have larger size in all four sides than the negative electrode plate 200 and the positive electrode plate 400, and therefore, they can be adhered to each other to fix the position of the electrode assembly and the electrode tabs connected thereto.

According to the present embodiment, of the first separator 100 and the second separator 300 are adhered by pressing with the sealing member 500 having a bent portion 520 in which the width at both ends is formed wider than the width at the central portion. Therefore, the first separator 100 and the second separator 300 can formed such that the whole of the tab edge portions of the first and second separators 100 and 300 located on the side on which the positive electrode tab 410 and the negative electrode tab 210 are formed, and a part of the both side edge portions connected to the tab edge portions are adhered to each other, whereby the adhesion width W1 inward from the tab edge portions is about 2% to 50%, specifically 10% to 20% smaller than the inward adhesion width W2 at both ends where the tab edge portions and the both side edges portions are connected.

At this time, the sealing member 500 may be formed of a sealing bar.

Further, according to the present embodiment, a heating means can be formed inside the sealing member 500. The separators are adhered by pressing the sealing member 500, and at the same time, the separators are heated via a heating means, so that the separators can be adhered to each other by heat fusion.

Conventionally, for adhesion between separators, a separator adhesion process was performed in which the edge portions of the separators located at the portion where the electrode tabs are formed is pressed using a straight sealing member to adhere the separators. However, when the sealing member is formed in a straight shape to adhere only the tab corners of the separators, a relatively weak adhesive force is acted on the corner portions of the separators, which may cause a folding phenomenon of the separators.

Thereby, according to the present embodiment, the first separator 100 and the second separator 300 are adhered by pressing the formation portion of the negative electrode tab 210 and the positive electrode tab 410 by using a sealing member 500 having a bent portion 520 having a shape corresponding to the edge portion of the first separator 100 and the second separator 300 on which the negative electrode tab 210 and the positive electrode tab 410 are formed, whereby the pressing force through the sealing member 500 can be strongly applied even to the corner portion of the separator, thereby normally realizing the adhesion between the separators even at the corner portion, and preventing the folding phenomenon of the separators at the corner portion.

Further, according to the present embodiment, the sealing member 500 is formed so that the adhesion portion of the first separator 100 and the second separator 300 does not interfere with the negative electrode plate 200 and the positive electrode plate 400. The first separator 100 and the second separator 300 are pressed so that they do not interfere with the positive electrode plate 200 and the positive electrode plate 400.

As described above, the method of forming the adhesion portion of the first separator 100 and the second separator 300 so as not to interfere with the negative electrode plate 200 and the positive electrode plate 400 is most basically not shown in the drawings, but the size of the first separator 100 and the second separator 300 is made larger in four sides than the negative electrode plate 200 and the positive electrode plate 400, which can be carried out by an adhesion method using the sealing member 500 so as not to overlap even at any portion.

In this case, the first separator 100 and the second separator 300 can be made larger than the negative electrode plate 200 and the positive electrode plate 400, or the region pressed and adhered by the sealing member 500 can be made smaller.

Alternatively, as shown in Fig. 2 of the present disclosure, before the step of forming the electrode assembly, at the four corner portions of the negative electrode plate 200 interposed between the first separator 100 and the second separator 300, a recessed portion 220 corresponding to the adhesive shape can be formed so that the negative electrode plate does not interfere with the portion where a part of the edges on both side sides of the first separator 100 and the second separator 300 are adhered. Since the seal member 500 is formed so that the width at both ends is wider than the width at the central portion, and thus has a bent portion 520, interference occurs between the bent portion 520 of the sealing member 500 and the negative electrode plate 200 during the pressing of the first and second separators 100 and 300. Therefore, according to the present embodiment, the recessed portion 220 is pressed so as to correspond to the portion where the bent portion 520 presses and the four corner portions of the negative electrode plate 200 positioned, whereby even when the sealing member 500 presses the separators, the negative electrode plate 200 may not interfere with the pressed portion. Therefore, it is possible to prevent safety problems such as damage to the negative electrode plate 200 due to the pressing of the sealing member 500.

The battery cells described above can be included in a battery module, and these battery modules can be included in a battery pack. The battery pack may have a structure in which one or more of the battery modules according to the embodiment of the present disclosure are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

### [Description of Reference Numerals]

100: first separator
200: negative electrode plate
210: negative electrode tab
220: recessed portion
300: second separator
400: positive electrode plate
410: positive electrode tab
500: sealing member
510: main portion
520: two bent portions

### [Industrial Applicability]

A battery cell and a method for manufacturing the same according to an embodiment of the present invention provide an effect of preventing a folding phenomenon of the separator during an adhesion process between the separators, and adhering the separators so as not to occur interference with the electrode.

## Claims

1. A battery cell comprising:
an electrode assembly formed by sequentially stacking a first separator (100), a negative electrode plate (200), a second separator (300) and a positive electrode plate (400) having a rectangular shape with tab and side edge portions;
a negative electrode tab (210) formed to protrude from the tab edge portion of the negative electrode plate (200); and
a positive electrode tab (410) formed to protrude from the tab edge portion of the positive electrode plate (400),
the battery cell being **characterised in that**:
it comprises a sealing member (500), wherein the first separator (100) and the second separator (300) are adhered by pressing with the sealing member (500) having an inward adhesion width (W1) at the tab edge portion, and a bent portion (520) relative to the inward adhesion width (W1), in which the width (W2) at both ends is formed;
wherein the first separator (100) and the second separator (300) have larger size in all four sides than the negative electrode plate (200) and the positive electrode plate (400), and the whole of the tab edge portions of the first and second separators (100, 300) and a part of the both side edge portions connected to the tab edge portion are adhered to each other, whereby the adhesion width (W1) inward from the tab edge portion is smaller than the bent portion in which the width (W2) is formed and
wherein the inward adhesion width (W1) at the tab edge portion is 2% to 50% smaller than the the bent portion in which the width (W2) is formed at both ends where the tab edge portion (110, 310) and the both side edges portions are connected.

2. The battery cell according to claim 1, wherein:
the negative electrode tab (210) and the positive electrode tab (410) protrude in opposite directions.

3. The battery cell according to claim 1, wherein:
the positive electrode plate (400) and the negative electrode plate (200) do not interfere with the adhered portions of the first and second separators (100, 300).

4. The battery cell according to claim 1, wherein:
the negative electrode plate (200) has larger size in all four sides than the positive electrode plate (400), and a recessed portion (220) corresponding to the adhesive shape is formed at the four corners of the negative electrode plate (200), so that the negative electrode plate (200) does not interfere with a portion to which a part of both side edge portions of the first and second separators (100, 300) are adhered.

5. A method for manufacturing a battery cell comprising the steps of:
sequentially stacking a first separator (100), a negative electrode plate (200), a second separator (300) and a positive electrode plate (400) to form an electrode assembly having an edge portion; and
pressing and sealing the first and second separators (100, 300) by using a sealing member (500) having an inward adhesion width (W1) on the edge portion, and a bent portion (520) relative to the inward adhesion width (W1), in which a width (W2) on the edge portion and at both ends is formed wider than the width (W1) at the central portion.

6. The method for manufacturing a battery cell according to claim 5, wherein:
the sealing member (500) is formed of a sealing bar.

7. The method for manufacturing a battery cell according to claim 5, wherein:
in the step of pressing and sealing the first and second separators (100, 300) using the sealing member (500),
the sealing member (500) is formed in a shape corresponding to the edge portions of the first and second separators (100, 300) on which the positive electrode tab (410) and the negative electrode tab (210) are formed, so as to press the whole of the tab edge portions (110, 310) of the first and second separators (100, 300) located on the sides on which the positive electrode tab (410) and the negative electrode tab (210) are formed and a part of the both side edge portions connected to the tab edge portion.

8. The method for manufacturing a battery cell according to claim 5, wherein:
a heating means is formed inside the sealing member (500).

9. The method for manufacturing a battery cell according to claim 5, wherein:
the sealing member (500) presses the first and second separators (100, 300) so as not to interfere with the positive electrode plate (400) and the negative electrode plate (200).

10. The method for manufacturing a battery cell according to claim 5,
which further comprises forming a recessed portion (220) in the four corner portions of the negative electrode plate (200), before forming the electrode assembly.

11. The method for manufacturing a battery cell according to claim 10,
in the step of pressing and sealing the first and second separators (100, 300) using the sealing member (500),
the bent portion (520) of the sealing member (500) presses the first and second separators (100, 300) so as to correspond to the recessed portion (220) in the four corner portions of the negative electrode plate (200).

12. A battery module comprising the battery cell according to claim 1.

13. The method for manufacturing a battery cell according to claim 5,
wherein the negative electrode tab (210) protruding from the negative electrode plate (200) and the positive electrode tab (410) protruding from the positive electrode plate (400) protrude in opposite directions.

## Patentansprüche

1. Batteriezelle aufweisend:
eine Elektrodenanordnung, die durch aufeinanderfolgendes Stapeln eines ersten Separators (100), einer negativen Elektrodenplatte (200), eines zweiten Separators (300) und einer positiven Elektrodenplatte (400) mit einer rechteckigen Form mit einem Tab-Randabschnitt und Seitenrand-Abschnitten ausgebildet ist;
einen negativen Elektrodentab (210), der so ausgebildet ist, dass er von dem Tab-Randabschnitt der negativen Elektrodenplatte (200) vorsteht; und
einen positiven Elektrodentab (410), der so ausgebildet ist, dass er von dem Tab-Randabschnitt der positiven Elektrodenplatte (400) vorsteht,
wobei die Batteriezelle **dadurch gekennzeichnet ist, dass** sie aufweist:
ein Dichtungselement (500), wobei der erste Separator (100) und der zweite Separator (300) durch Pressen mit dem Dichtungselement (500) mit einer nach innen gerichteten Klebebreite (W1) an dem Tab-Randabschnitt und einem gebogenen Abschnitt (520) relativ zu der nach innen gerichteten Klebebreite (W1), in der die Breite (W2) an beiden Enden ausgebildet ist, verklebt sind;
wobei der erste Separator (100) und der zweite Separator (300) in allen vier Seiten größere Größen als die negative Elektrodenplatte (200) und die positive Elektrodenplatte (400) aufweisen und die Gesamtheit der Tab-Randabschnitte des ersten und des zweiten Separators (100, 300) und ein Teil der beiden Seitenrand-Abschnitte, die mit dem Tab-Randabschnitt verbunden sind, miteinander verklebt sind, wodurch die Klebebreite (W1) von dem Tab-Randabschnitt nach innen kleiner ist als der gebogene Abschnitt, in dem die Breite (W2) ausgebildet ist, und
wobei die nach innen gerichtete Klebebreite (W1) an dem Tab-Randabschnitt um 2% bis 50% kleiner ist als der gebogene Abschnitt, in dem die Breite (W2) an beiden Enden ausgebildet ist, an denen der Tab-Randabschnitt (110, 310) und die beiden Seitenrand-Abschnitte verbunden sind.

2. Batteriezelle nach Anspruch 1, wobei:
der negative Elektrodentab (210) und der positive Elektrodentab (410) in entgegengesetzte Richtungen vorstehen.

3. Batteriezelle nach Anspruch 1, wobei:
die positive Elektrodenplatte (400) und die negative Elektrodenplatte (200) nicht in die anhaftenden Abschnitte des ersten und des zweiten Separators (100, 300) eingereifen.

4. Batteriezelle nach Anspruch 1, wobei:
die negative Elektrodenplatte (200) in allen vier Seiten größere Größen als die positive Elektrodenplatte (400) aufweist und ein vertiefter Abschnitt (220), der der Klebstoffform entspricht, an den vier Ecken der negativen Elektrodenplatte (200) ausgebildet ist, so dass die negative Elektrodenplatte (200) nicht in einen Abschnitt einläuft, an dem ein Teil der beiden Seitenrand-Abschnitte des ersten und des zweiten Separators (100, 300) anhaftet.

5. Verfahren zum Herstellen einer Batteriezelle aufweisend die Schritte:
aufeinanderfolgendes Stapeln eines ersten Separators (100), einer negativen Elektrodenplatte (200), eines zweiten Separators (300) und einer positiven Elektrodenplatte (400), um eine Elektrodenanordnung mit einem Randabschnitt auszubilden; und
Pressen und Abdichten des ersten und des zweiten Separators (100, 300) unter Verwendung eines Dichtungselements (500) mit einer nach innen gerichteten Klebebreite (W1) an dem Randabschnitt und einem gebogenen Abschnitt (520) relativ zu der nach innen gerichteten Klebebreite (W1), in dem eine Breite (W2) an dem Randabschnitt und an beiden Enden breiter ausgebildet ist als die Breite (W1) an dem Mittelabschnitt.

6. Verfahren zum Herstellen einer Batteriezelle nach Anspruch 5, wobei:
das Dichtungselement (500) aus einem Dichtungsstab ausgebildet ist.

7. Verfahren zum Herstellen einer Batteriezelle nach Anspruch 5, wobei:
in dem Schritt des Pressens und Abdichtens des ersten und des zweiten Separators (100, 300) unter Verwendung des Dichtungselements (500),
das Dichtungselement (500) in einer Form ausgebildet ist, die den Randabschnitten des ersten und des zweiten Separators (100, 300) entspricht, auf denen der positive Elektrodentab (410) und der negative Elektrodentab (210) ausgebildet sind, um so die Gesamtheit der Tab-Randabschnitte (110, 310) des ersten und des zweiten Separators (100, 300), die sich auf den Seiten befinden, auf denen der positive Elektrodentab (410) und der negative Elektrodentab (210) ausgebildet sind, und einen Teil der beiden Seitenrand-Abschnitte, die mit dem Tab-Randabschnitt verbunden sind, zu pressen.

8. Verfahren zum Herstellen einer Batteriezelle nach Anspruch 5, wobei:
ein Heizmittel innerhalb des Dichtungselements (500) ausgebildet ist.

9. Verfahren zum Herstellen einer Batteriezelle nach Anspruch 5, wobei:
das Dichtungselement (500) den ersten und den zweiten Separator (100, 300) presst, um nicht in die positive Elektrodenplatte (400) und die negative Elektrodenplatte (200) einzureifen.

10. Verfahren zum Herstellen einer Batteriezelle nach Anspruch 5,
welches ferner das Ausbilden eines vertieften Abschnitts (220) in den vier Eckabschnitten der negativen Elektrodenplatte (200) vor dem Ausbilden der Elektrodenanordnung aufweist.

11. Verfahren zum Herstellen einer Batteriezelle nach Anspruch 10,
in dem Schritt des Pressens und Abdichtens des ersten und des zweiten Separators (100, 300) unter Verwendung des Dichtungselements (500),
der gebogene Abschnitt (520) des Dichtungselements (500) den ersten und den zweiten Separator (100, 300) presst, um dem vertieften Abschnitt (220) in den vier Eckabschnitten der negativen Elektrodenplatte (200) zu entsprechen.

12. Batteriemodul aufweisend die Batteriezelle nach Anspruch 1.

13. Verfahren zum Herstellen einer Batteriezelle nach Anspruch 5,
wobei der negative Elektrodentab (210), der von der negativen Elektrodenplatte (200) vorsteht, und der positive Elektrodentab (410), der von der positiven Elektrodenplatte (400) vorsteht, in entgegengesetzte Richtungen vorstehen.

## Revendications

1. Cellule de batterie, comprenant:
un ensemble d'électrodes formé en empilant séquentiellement un premier séparateur (100), une plaque d'électrode négative (200), un deuxième séparateur (300) et une plaque d'électrode positive (400) de forme rectangulaire avec des portions de bord de languette et latérale ;
une languette d'électrode négative (210) formée de façon à dépasser de la portion de bord de languette de la plaque d'électrode négative (200) ; et
une languette d'électrode positive (410) formée de façon à dépasser de la portion de bord de languette de la plaque d'électrode positive (400),
la cellule de batterie étant **caractérisée en ce qu'**elle comprend
un élément de scellement (500), l'adhérence du premier séparateur (100) et du deuxième séparateur (300) s'effectuant par pression de l'élément de scellement (500) présentant une largeur d'adhérence intérieure (W1) sur la portion de bord de languette, et une portion courbée (520) relativement à la largeur d'adhérence intérieure (WI), dans laquelle la largeur (W2) aux deux bouts est formée ;
les dimensions du premier séparateur (100) et du deuxième séparateur (300) étant supérieures sur les quatre côtés à celles de la plaque d'électrode négative (200) et la plaque d'électrode positive (400), et l'ensemble des portions de bord de languette des premier et deuxième séparateurs (100, 300) et une partie des deux portions de bord latéral connectées à la portion de bord de languette adhérant les unes aux autres, la largeur d'adhérence (W1) vers l'intérieur depuis la portion de bord de languette étant inférieure à la portion courbée dans laquelle est formée la largeur (W2), et
la largeur d'adhérence vers l'intérieur (W1) à la portion de bord de languette étant inférieure de 2 % à 50 % à la portion courbée dans laquelle est formée la largeur (W2) aux deux bouts où sont connectées la portion de bord de languette (110, 310) et les deux portions de bord latéral.

2. Cellule de batterie selon la revendication 1,
la languette d'électrode négative (210) et la languette d'électrode positive (410) étant saillantes dans des directions opposées.

3. Cellule de batterie selon la revendication 1,
la plaque d'électrode positive (400) et la plaque d'électrode négative (200) n'entravant pas les portions adhérées des premier et deuxième séparateurs (100, 300).

4. Cellule de batterie selon la revendication 1,
les dimensions de la plaque d'électrode négative (200) étant supérieures sur les quatre côtés à celles de la plaque d'électrode positive (400), et une portion évidée (220) correspondant à la forme adhésive étant formée aux quatre coins de la plaque d'électrode négative (200), de sorte que la plaque d'électrode négative (200) n'entrave pas une portion à laquelle adhère une partie des deux portions marginales latérales des premier et deuxième séparateurs (100, 300).

5. Procédé de fabrication d'une cellule de batterie comprenant les étapes suivantes :
empilement séquentiel d'un premier séparateur (100), d'une plaque d'électrode négative (200), d'un deuxième séparateur (300), et d'une plaque d'électrode positive (400) pour former un ensemble d'électrodes possédant une portion de bord ; et
pressage et scellement des premier et deuxième séparateurs (100, 300) à l'aide d'un élément de scellement (500) possédant une largeur d'adhérence vers l'intérieur (W1) sur la portion marginale, et une portion courbée (520) relativement à la largeur d'adhérence intérieure (W1) dans laquelle une largeur (W2) sur la portion de bord et aux deux bouts est réalisée avec une largeur supérieure à la largeur (W1) de la portion centrale.

6. Procédé de fabrication d'une cellule de batterie selon la revendication 5,
l'élément de scellement (500) étant réalisé avec une barre de scellement.

7. Procédé de fabrication d'une cellule de batterie selon la revendication 5, dans lequel
à l'étape de pressage et scellement des premier et deuxième séparateurs (100, 300) à l'aide de l'élément de scellement (500),
l'élément de scellement (500) est réalisé avec une forme correspondant aux portions de bord des premier et deuxième séparateurs (100, 300) sur lesquelles sont formées la languette d'électrode positive (410) et la languette d'électrode négative (210), de façon à presser l'ensemble des portions de bord de languette (110, 310) des premier et deuxième séparateurs (100, 300) situés sur les côtés sur lesquels sont formées la languette d'électrode positive (410) et la languette d'électrode négative (210), ainsi qu'une partie des deux portions de bord latéral connectées à la portion de bord de languette.

8. Procédé de fabrication d'une cellule de batterie selon la revendication 5,
un dispositif de chauffage étant formé à l'intérieur de l'élément de scellement (500).

9. Procédé de fabrication d'une cellule de batterie selon la revendication 5,
l'élément de scellement (500) appuyant sur les premier et deuxième séparateurs (100, 300) de façon à ne pas entraver la plaque d'électrode positive (400) et la plaque d'électrode négative (200).

10. Procédé de fabrication d'une cellule de batterie selon la revendication 5,
comprenant en outre la formation d'une portion évidée (220) aux quatre portions d'angle de la plaque d'électrode négative (200), avant de former l'ensemble d'électrodes.

11. Procédé de fabrication d'une cellule de batterie selon la revendication 10,
à l'étape de pressage et scellement des premier et deuxième séparateurs (100, 300) à l'aide de l'élément de scellement (500),
la portion courbée (520) de l'élément de scellement (500) faisant pression sur les premier et deuxième séparateurs (100, 300) de façon à ce qu'ils correspondent à la portion évidée (220) aux quatre portions d'angle de la plaque d'électrode négative (200).

12. Module de batterie comprenant la cellule de batterie selon la revendication 1.

13. Procédé de fabrication d'une cellule de batterie selon la revendication 5,
la languette d'électrode négative (210) faisant saillie de la plaque d'électrode négative (200) et la languette d'électrode positive (410) faisant saillie de la plaque d'électrode positive (400) saillante dans des directions opposées.
